# EUROPEAN PATENT APPLICATION

(11) **EP 0 698 976 A1**
(43) Date of publication of application: **28.02.1996**
(21) Application number: 95305377.4
(22) Date of filing: 01.08.1995
(51) Int. Cl.: H04L 12/28, H04Q 7/36, G01S 5/00

(54) **Wireless local area network system**

(30) Priority: 24.08.1994 GB 9417128
(71) Applicant: PLESSEY SEMICONDUCTORS LIMITED, Swindon, Wiltshire SN2 2QW (GB)
(72) Inventor: Minett, Peter John, Swindon, Wiltshire SN5 9HJ (GB)
(74) Representative: Hoste, Colin Francis

(57) **Abstract**

A wireless local area network system comprises a first transmitter/receiver arrangement (base station) (10) having a plurality of switchable directional antennae (11,12,13,14) orientated in different directions and arranged to switch into circuit one of the antennae in whose footprint lies a second transmitter/receiver arrangement (user) (19,20). Because the antenna arrangement has gain relative to a single isotropic antenna, communication between the base station and user can be effected at reduced transmitter power relative to an equivalent isotropic system. Positional information on the second and any further transmitter/receiver arrangements (users) can be obtained by the base station either by transmission of GPS (Global Positioning by Satellite) or radio location data from user to base station, or by arranging for the base station to scan through all antennae until the relevant user is located. The antennae will normally provide full azimuth coverage at uniform gain, or may be configured to give elevational coverage, or both.

## Description

The invention concerns a radio local area network having two or more transmitter/receiver arrangements.

Radio, or wireless, local area networks have been developed for linking together users of the networks, which users may be mobile for instance, via a base station.

The regulations governing the radio frequencies to be used for such networks limit the maximum transmitted power density to avoid interference between adjacent networks. For example, for the frequency band from 2.4 to 2.5 GHz it is proposed to limit the maximum output power to 100mW equivalent isotropically radiated power (EIRP). There is a demand for a system which allows a reduction in this transmitted power so as to increase cell isolation, reduce the power demands on the individual cell users and increase the number of simultaneous users in the cell.

In accordance with the invention, there is provided a radio local area network having a first transmitter/receiver arrangement which comprises a plurality of switchable directional antennae orientated in different directions and positional information receiving means arranged to switch one of the plurality of antennae into circuit with a receiver or transmitter of the first transmitter/receiver arrangement in dependence on information received by the first transmitter/receiver arrangement concerning the position of said second transmitter/receiver arrangement, the antennae having gain so as to allow a reduction in the transmit power of the first and/or second transmitter/receiver arrangement relative to the transmit power necessary in an equivalent radio local area network having a first transmitter/receiver arrangement employing a single isotropic antenna.

By providing at least the base station with a number of switchable directional antennae, the transmission field, at least in one plane, may be divided up into a corresponding number of segments each having an antenna gain related to the directionality of the antennae, such that, in communicating with the base station, any user that would normally be required in a conventional network employing a single isotropiczz antenna.

The first plurality of directional antennae may be arranged to provide a substantially constant gain, in substantially all directions in azimuth, greater than that of a single isotropic antenna. This has the advantage of providing substantially uniform coverage over the whole of the transmission area. While the segments created by the directional antennae will normally be subdivisions of the azimuth plane of the transmission field, the antennae may be configured so that segments are created in elevation, rather than in azimuth, or in both elevation and azimuth.

The positional information may be derived by the second transmitter/receiver arrangement by means of a Global-Positioning-by-Satellite system. Alternatively, the information may be derived by means of a radio location system, such as Decca or Loran.

The positional information receiving means may comprise an omnidirectional antenna for the receiving of the positional information from the second transmitter/receiver arrangement, the omnidirectional antenna being switchably connected to the receiver of the first transmitter/receiver arrangement. Alternatively, the omnidirectional antenna may be connected to a further receiver in the positional information receiving means, the further receiver and omnidirectional antenna co-operating with the second transmitter/receiver arrangement to form a low-power, narrow-band radio link for the transfer of positional information.

As an alternative to the use of an omnidirectional antenna, a second plurality of directional antennae may be employed as part of the positional information receiving means and connected all in parallel either to the main receiver via a switching arrangement or to a further receiver in the positional information receiving means, as outlined above. In the latter case, the further receiver and the second plurality of directional antennae cooperate with the second transmitter/receiver arrangement to form a low-power, narrow-band radio link for the transfer of positional information.

In an alternative method of deriving the positional information, the first transmitter/receiver arrangement may comprise scanning means arranged to execute a periodic scanning operation in which the first plurality of directional antennae are switched sequentially into circuit until a signal from the second transmitter/receiver arrangement is picked up by one of the first plurality of antennae, upon which scanning ceases until a communication session between the first and second transmitter/receiver arrangements has ended.

The first transmitter/receiver arrangement may be arranged to switch more than one of the first plurality of directional antenna into circuit at the same time. This means that the network according to the invention is capable of establishing more than one radio link at a time between the base station and the various users in the system, an advantage which springs directly from the directional nature of the antenna arrangement employed.

The first and/or second transmitter/receiver arrangement may be provided with range-determining means for detecting the strength of a received signal and, on the basis of the detected signal strength, adjusting the output power of the respective transmitter, such as to decrease the transmitter power at close ranges. Alternatively, the range-determining means may be arranged to adjust the sensitivity of the respective receiver, such as to decrease the sensitivity at close ranges.

The invention will now be described, by way of example only, with reference to the drawings, of which:
Figure 1 is a simplified plan-view representation of a radio local area network according to the invention showing the subdivision of the azimuth plane of the transmission field into segments;
Figure 2 shows a network as in Figure 1, but with the transmission field subdivided in elevation, and
Figure 3 shows a network as in Figures 1 and 2, but with the transmission field subdivided in both azimuth and elevation.

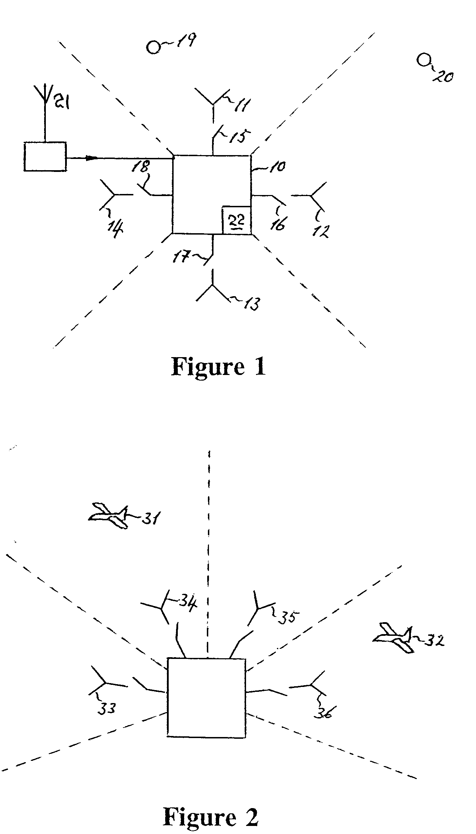

Referring now to Figure 1, in Figure 1 a base station 10 for a WLAN according to the invention is equipped with four directional antennae 11-14, which are coupled to the transmit/receive circuitry of the base station by means of respective switching arrangements 15-18. The antennae 11-14 are arranged around the base station at 90° intervals. The antennae possess a gain of approximately four over an equivalent single isotropic antenna and have a radiation pattern occupying one of the segments shown. A number of satellite users exist in the network, of which only two, 19 and 20, are shown. The users 19, 20 are provided with equipment for deriving information regarding their position in terms of latitude and longitude. This equipment may take the form of a GPS receiver (Global Positioning by Satellite) or a radio location unit (e.g. Decca or Loran). The users 19, 20 periodically transmit a short burst of position data to the base station 10, thereby continually updating the base station as to their whereabouts. This information is stored in the base station and used, when it required to establish a communication link with one of the users, to close the appropriate switch 15-18 to switch in the antenna whose footprint (i.e. radiation pattern) contains the user concerned.

Because of the directional nature of the antenna arrangement of Figure 1, the maximum transmit power of the base station 10 is reduced from 100 mW (ETS 300-328 specified maximum) to 25 mW. Likewise, the transmit power of the users 19, 20 is reduced from 100 mW to 25 mW, the result being an increase in battery life in the users 19, 20 (which may, for example, be radio telephones in a motor vehicle), increased isolation with neighbouring cells, where these exist, and the ability of the base station to establish simultaneous contact at the same frequency with the users 19 and 20 which are located in different segments.

The positional-information link between user and base station is established by the provision of a separate omnidirectional antenna 21 at the base station 10. This antenna 21 is switchably connected to the main receiving circuitry in the base station so that the station may be receiving either positional information from its various users or transmitting or receiving communication data to or from those users. Since this antenna is non-directional, the user is required to transmit the positional data at a higher power than the communication data, i.e. up to a maximum of 100 mW.

In a second embodiment of the invention, the users 19, 20 are not equipped with a GPS or radio location unit, but the base station is instead provided with a scanning means 22 which sequentially switches in the four antennae 11-14 in turn until a signal from, say, user 20 is detected from antenna 12. At that point, scanning stops and antenna 12 remains in circuit with the transmit/receive circuitry of the base station 10, allowing communication to proceed between user 20 and the base station 10.

In a third embodiment of the invention, illustrated in Figure 2, the antennae are arranged to divide the transmission field into segments in elevation. Figure 2 is, then, a side view of the base station in a network which is suitable for establishing communication links between aircraft. Two such aircraft, 31, 32 are shown in two of four different segments set up by directional antennae 33-36. In this configuration, there are, as in Figure 1, four antennae 33-36, but these antennae are arranged to have greater directionality than the antennae 11-14 in Figure 1 in order to avoid radiating power needlessly toward ground.

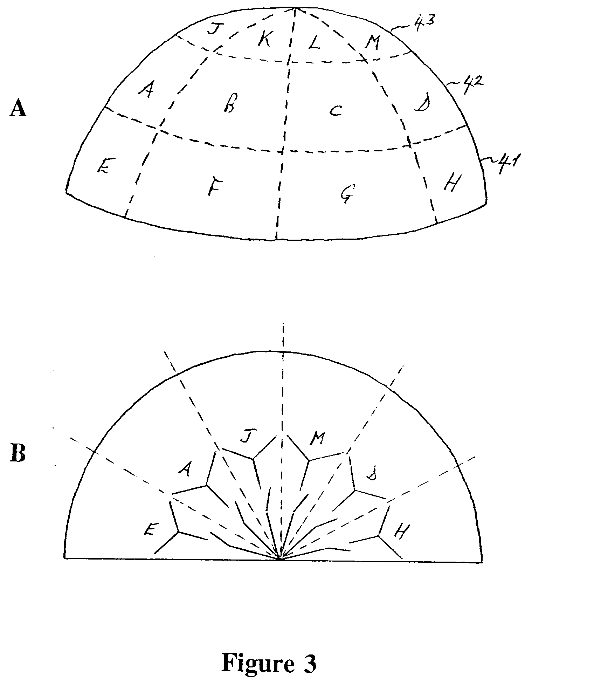

In a fourth embodiment of the invention (see Figure 3), the antennae are arranged to provide coverage in segments in both azimuth, as in Figure 1, and in elevation, as in Figure 2. The antennae are, in this arrangement, configured as a hemispherical array (see Figure 3A) consisting of a total of eighteen antennae. Figure 3B is a section through the plane of the paper and depicts six of the eighteen antennae subdividing the transmission space into six corresponding segments. For each of the three horizontal levels 41, 42, 43 there are six antennae, of which only four are shown in Figure 3A.

In a fifth embodiment of the invention, the network illustrated in any of Figures 1, 2 or 3 is arranged to adjust transmission strength in both the base station and the individual users by taking into account the range of the users relative to the base station.

In this embodiment, the base station and the individual users each include a range-determining means (not shown) which detects the strength of a received signal and, where the signal is found to be strong, reduces the transmission power of the respective transmitter. This embodiment provides further savings in battery power and increased isolation between adjacent cells. As an alternative to reducing transmission power, the sensitivity of the respective receiver may be reduced.

While the positional data link between base and user in the first embodiment of the invention has been described in terms of the provision of a separate omnidirectional antenna at the base station switchably coupled to the receiver system, there are alternative methods of establishing this link. One such method is to employ the same switchable coupling arrangement with the main receiver of the base station, but to use a separate set of parallel-connected directional antennae at the base station instead of the omnidirectional antenna. In this arrangement, all the positional antennae would be listening at once when the receiver circuitry was coupled to them, otherwise the main antennae would be in circuit. Alternatively, a similar set of parallel-connected directional antennae could be employed, or else a single omnidirectional antenna as in the previous arrangement, but coupled to a completely separate radio system from the main system. This would be a radio system operating at a lower data rate and having a narrower band and lower power output than the main system.

Clearly, where a set of directional antennae is employed to receive the positional information instead of an omnidirectional antenna, the power demand on the user equipment is less, which, especially when used with the low-power radio option described above for the transmission of positional information, results in an increased battery life.

## Claims

1. A radio local area network having a first transmitter/receiver arrangement which comprises a plurality of switchable directional antennae orientated in different directions and positional information receiving means arranged to switch one of the plurality of antennae into circuit with a receiver or transmitter of the first transmitter/receiver arrangement in dependence on information received by the first transmitter/receiver arrangement concerning the position of said second transmitter/receiver, the antennae having gain so as to allow a reduction in the transmit power of the first and/or second transmitter/receiver arrangement relative to the transmit power necessary in an equivalent radio local area network having a first transmitter/receiver arrangement employing a single isotropic antenna.

2. A radio local area network as claimed in Claim 1, in which the first plurality of directional antennae are arranged to provide a substantially constant gain, in substantially all directions in azimuth.

3. A radio local area network as claimed in Claim 1 or Claim 2, in which the first plurality of directional antennae are arranged to provide a substantially constant gain, in substantially all directions in elevation.

4. A radio local area network as claimed in Claim 1, in which the positional information is derived at the second transmitter/receiver arrangement by means of a Global-Positioning-by-Satellite system.

5. A radio local area network as claimed in Claim 1, in which the positional information is derived at the second transmitter/receiver arrangement by means of a radio location system.

6. A radio local area network as claimed in any one of Claims 1 to 5, in which the positional information receiving means comprises an omnidirectional antenna for the receiving of the positional information from the second transmitter/receiver arrangement, the omnidirectional antenna being switchably connected to the receiver of the first transmitter/receiver arrangement.

7. A radio local area network as claimed in any one of Claims 1 to 5, in which the positional information receiving means comprises a second plurality of directional antennae for the receiving of the positional information from the second transmitter/receiver arrangement, the second plurality of directional antennae being connected in parallel and being switchably connected to the receiver of the first transmitter/receiver arrangement.

8. A radio local area network as claimed in any one of Claims 1 to 5, in which the positional information receiving means comprises an omnidirectional antenna for the receiving of the positional information from the second transmitter/receiver arrangement and a further receiver to which the omnidirectional antenna is connected, the further receiver and the omnidirectional antenna co-operating with the second transmitter/receiver arrangement to form a low-power, narrow-band radio link for the transfer of positional information.

9. A radio local area network as claimed in any one of Claims 1 to 5, in which the positional information receiving means comprises a second plurality of directional antennae for the receiving of the positional information from the second transmitter/receiver arrangement and a further receiver, the second plurality of directional antennae being connected in parallel and to the further receiver, the further receiver and the second plurality of directional antennae co-operating with the second transmitter/receiver arrangement to form a low-power, narrow-band radio link for the transfer of positional information.

10. A radio local area network having a first transmitter/receiver arrangement which comprises a plurality of directional antennae and scanning means arranged to execute a periodic scanning operation in which the plurality of directional antennae are switched sequentially into circuit until a signal from a second transmitter/receiver arrangement is picked up by one of the plurality of directional antennae, upon which scanning ceases until a communication session between the first and second transmitter/receiver arrangements has ended.

11. A radio local area network as claimed in any one of the preceding claims, in which the first transmitter/receiver arrangement is arranged to switch more than one of the first plurality of directional antennae into circuit at the same time.

12. A radio local area network as claimed in any one of the preceding claims, in which the first and/or the second transmitter/receiver arrangement is provided with a range-determining means for detecting the strength of a received signal and, on the basis of the detected signal strength, adjusting the output power of the respective transmitter, such as to decrease the transmitter power at close ranges.

13. A radio local area network as claimed in any one of Claims 1 to 11, in which the first and/or the second transmitter/receiver arrangement is provided with a range-determining means for detecting the strength of a received signal and, on the basis of the detected signal strength, adjusting the sensitivity of the respective receiver, such as to decrease the sensitivity at close ranges.

14. A radio local area network substantially as hereinbefore described with reference to the accompaying drawings.
